# EUROPEAN PATENT APPLICATION

(11) **EP 3 178 680 A1**
(43) Date of publication of application: **14.06.2017**
(21) Application number: 15275249.9
(22) Date of filing: 08.12.2015
(51) Int. Cl.: B60G 3/00, F41H 7/04, F41H 7/00

(54) **SMART MATERIAL COUPLINGS**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The following invention relates to smart material couplings, particularly to shape memory alloy suspension systems to mitigate against shock or blast. There is provided A land vehicle comprising:- an armoured v shaped hull; at least one wheel set with a hub, and at least one suspension device comprising a shape memory material operably connecting the hull to the wheel set.

## Description

The following invention relates to smart material couplings, particularly to shape memory alloy suspension systems to mitigate against shock or blast.

Before the present invention is described in further detail, it is to be understood that the invention is not limited to the particular embodiments described, as such may, of course, vary. It is also to be understood that the terminology used herein is for the purpose of describing particular embodiments only, and is not intended to be limiting, since the scope of the present invention will be limited only by the appended claims.

One problem with current armoured vehicles is their lack of capability to survive a mine blast or IED explosion. Most conventional suspensions use passive springs to absorb impacts in combination with a damper (shock absorbers) to control the passive spring motions, which fail to cope with high g-forces.

According to a first aspect of the invention there is provided a land vehicle comprising:-
an armoured v shaped hull;
at least one wheel set with a hub, and
at least one suspension device comprising a shape memory material operably connecting the hull to the wheel set.

Preferably the shape memory material is a shape memory alloy.

The suspension device may be connected between the hull and the hub of the wheel set, the wheel hub may be internal or external to the wheel, and preferably the hub is located within the wheel, to form an internal wheel hub. An internal hub removes a further component that can be damaged in the event of a blast impact.

The suspension device may be an active, semi-active or passive suspension. The use of active/semi-active suspension requires external control usually from sensors mounted on the vehicle. Active suspension typically further requires the use of fluids to positively control the degree of damping.

In a preferred arrangement the suspension device is in the form of a passive spring suspension device, such as for example, a shape memory alloy (SMA) in the forms of at least one SMA elongate rod, plurality of thin elongate SMA plates, SMA torsion bars, and SMA springs, such as, for example fixed or variable coiled spring and leaf springs.

There are many types of suspension devices, such as, for example, dependant suspension, semi-dependant or independent suspension systems, the latter of which permits each wheel to move independently of the other wheels, preferably the suspension device is an independent suspension device.

There are many configurations of suspension such as, for example, wish bone, double wish bone, live axle, forked (as for motor bikes), swing axle, and Macpherson. In a preferred arrangement the suspension device is in a wish bone configuration.

The suspension device is preferably external to the vehicle, the use of at least one elongate rod allows for very simple removal and replacement of the suspension device (and wheel set) from the hull of the vehicle, in the event of damage. The suspension device provides both suspension and may provide the exclusive means of connection to the hull, excluding any drive train. This removes the need for further chassis, axles or running gear between the wheels and the hull.

The use of elongate rods reduces the cross section of the suspension device. In the event of a blast attack, the majority of the blast may not impinge on the suspension device, thereby reducing damage to the suspension device.

The elongate rods may be of any cross section, such as circular, polygonal, elliptical. The elongate rod may be solid, or generally tubular in construction, such that the mass of the suspension device may be reduced. The rods may be of uniform cross section or of varying cross section along their entire length, the latter providing a taper to the elongate rod.

There may be one or preferably a plurality of elongate rods of shape memory alloy which operably extend and connect the hub of the wheel set to the hull of the vehicle. A single elongate rod may reduce the cross section but may not provide rigidity and allow excessive lateral movement of the wheel set attached thereto. Preferably a plurality of elongate rods are arranged such that the spacing of the fixings to the hull are at a greater distance apart than the fixings on the hub. This configuration reduces the lateral movement of the wheel set, attached thereto.

Preferably the suspension is arranged at an angle α, from the hull, such that the hull is at an elevated position with respect to the hub of the wheel set, preferably the angle α is greater than 10 degree, preferably in the range of 10 to 50 degrees.

The point of attachment of the suspension on the hull may be at least one wheel radius higher than the centre of the wheel hub, preferably at least 2 wheel radii higher.

In a preferred arrangement the suspension device consists only of at least one shape memory alloy, such that no other damping or spring is required to form the suspension for the vehicle.

The vehicle may have a plurality of wheel sets, 4wd, 6wd and 8wd are common sets, greater than 4 wheel sets allows for improved vehicle stability and offers a limp-home mode even when multiple wheels have been damaged or are inoperable.

The vehicle may further comprise a power plant, which may be electrical, internal combustion or hybrid, preferably electrical. The vehicle hull may further comprise a plurality of motors to provide drive to the wheel. There may be a common motor to each side of the vehicle, or each wheel set may have an individually controlled motor. Further the vehicle may further comprise electronics, for autonomous control, sensors, visual, audio, and communications.

The shape memory alloy may be selected from Cu-Al-Ni, NiTi, Fe-Mn-Si, Cu-Zn-Al, Cu-Al-Ni, and shape memory alloys of zinc, copper, gold and iron.

The shape memory alloy is preferably in the austenite state.

According to a further aspect there is provided a land vehicle comprising a chassis, a wheel set and at least one suspension device, said at least one suspension device comprising a shape memory material operably linking the chassis to the wheel set, preferably the suspension device contains only at least one shape memory alloy.

The armoured land vehicle may further comprise:-
an armoured v shaped hull;
a powerplant located within said hull,
at least one wheel set with a hub, and
at least one drivetrain comprising a shape memory material, wherein said drivetrain is located between and operably connected via drive couplings to said powerplant and the hub of the at least one wheel set, to provide drive to said at least one wheel set. Preferably the shape memory material is a shape memory alloy.

The drivetrain is the collection of devices that provide power to the driving wheels, such as, for example drive shafts, propeller shafts and half shafts.

Preferably the drivetrain is arranged at an angle α, from the hull, such that the hull is at an elevated position with respect to the hub of the wheel set, preferably the angle α is greater than 10 degree, preferably in the range of 10 to 50 degrees.

The drive couplings may be any conventional drive coupling, such as for example, spring drive couplings, universal joints, CV joints, plunge CV joints. The drive couplings may be manufactured from metals, alloys, such as for example steels, or shape memory alloys, preferably shape memory alloy drive couplings. The plunge CV joints may further be used in combination with a shock absorber, dampers, and springs to provide further suspension to the wheel set.

The driveshaft, prop shaft or half-shaft may comprise a shape memory alloy, more preferably the driveshaft, prop shaft or half-shaft contains only a shape memory alloy. The drivetrain may be located internally or externally, preferably an external drivetrain, preferably an external drivetrain which consists only of a shape memory alloy.

In a highly preferred arrangement there is at least one externally located drive shaft, wherein said drive shaft comprises a shape memory alloy, wherein said drive shaft is located between and operably connected via drive couplings to said power plant and the hub of the at least one wheel set, to provide drive to said at least one wheel set.

The drivetrain may be in the form of an elongate rod, which reduces the cross section of the drivetrain. In the event of blast attack, the majority of the blast will not impinge on the drivetrain, thereby reducing damage to the drivetrain.

The elongate rods may be of any cross section, such as circular, polygonal, elliptical. The elongate rod may be solid, or generally tubular in construction, such that the mass of the drivetrain may be reduced. The rods may be of uniform cross section or of varying cross section along their entire length, the latter providing a taper to the elongate rod.

According to a further aspect of the invention there is provided a vehicle comprising, a powerplant at least one wheel set with a hub, and at least one drivetrain, said drive train comprising a shape memory material, wherein said drivetrain is located between and operably connected via drive couplings to said powerplant and the hub of the at least one wheel set, to provide drive to said at least one wheel set.

### Detailed arrangement

The flexible suspension layout consists of a fixed wishbone type arrangement that uses the flexure of the elongate suspension rods themselves to provide the biased displacement of the wheels. The elongate rods comprise a memory metal or a plurality of thin plates to provide the extended flexure whilst providing the required stiffness to provide effective suspension. In one arrangement a pair of elongate rods, described as a pair of upper and a pair of lower suspension elongate rods, are in a fixed position relative to the v shaped hull. During normal use the flexure of the upper and lower suspension elongate rods allow them to bend and displace substantially vertically, thereby creating the required suspension travel for the vehicles' mobility across an uneven terrain, whilst reducing the vibration to the electronics, occupants, and power plant located in the vehicle.

In a preferred arrangement at least one end of the elongate rods may be provided with a bend radii, preferably the end in operable connection to the hub of the wheel. The bend radii of the suspension arms is then greater for an equivalent level of suspension travel.

The shape memory alloy rod when connected at the hull preferably comprises a bend radii in the plane of the connection, to a avoid twisting out of the plane The connection between the suspension elongate rod and wheel hub preferably comprises a bend radii out of the line of movement to reduce the elongate rod being cleaved from the hub during a shock hazard event.

The suspension elongate rods are designed to allow for a maximum vertical movement (deflection) whilst restricting the lateral movement of the wheel set, by arranging a first pair of upper and lower elongate rod and a second pair of upper and lower elongate rods, and arranging them in a substantially trapezoidal arrangement, such that the spacing between pairs of upper and lower elongate rods fixings on the hull are great than on the spacing on the hub of the wheel.

In one particular arrangement the suspension elongate rods may be connected to the wheel hub by a bearing surface, which may comprise a low friction liner or bearings, which allow for the rotation of the wheel hub relative to each of the upper and lower suspension arms.

Shape memory alloys display superelasticity, which is characterised by recovery of unusually large strains, in the order of greater than 8 percent. When SMAs are loaded in the austenite phase, the material will transform to the martensite phase above a critical stress. Further loading causes the twinned martensite to begin to detwin, allowing the material to undergo large deformations. Once the stress is released, the martensite transforms back to austenite's original shape.

The armoured land vehicle may further comprise a single monocoque hull or a split hull.
The split hull may comprise;
a. a lower armoured v shaped hull;
b. an upper hull which is located above and slidably engaged in a vertical plane with said lower hull,
c. wherein there is at least one biased resilient member located between said upper hull and lower hull, to reduce the travel between said upper and lower hulls in the event of a shock event.

The biased resilient member may be at least one, spring, variable coiled spring, leaf spring, shape memory alloy elongate rod plurality of thin elongate shape memory alloy plates, rubber bush or torsion bars. Preferably the at least one biased resilient member is in the form of a spring. The biased resilient member is biased to an extended position, to keep the upper and lower hull at maximum separation.

The biased resilient member may further comprise a damper or shock absorber, such as a fluid damper. There are many configurations of damping, such that they may be dependant, semi-dependant or independent suspension systems, the latter of which permits parts of the upper and lower hulls to move independently of each other.

The vehicle may comprise at least one stop, to prevent over displacement of the upper and lower hulls. There may be a plurality of individual stops or a projection which extends around the entire periphery. The at least one stop may prevent excess damage to the respective hulls and the use of a plurality or continuous projection may spread the shock impulse force around a larger section of the upper and lower hulls. The stop may be located on the lower hull, upper hull or a combination of both upper and lower hulls.

The biased resilient member may be active, semi-active or passive. The use of active/semi-active suspension requires external control usually from sensors mounted on the vehicle. Active suspension typically further requires the use of fluids to positively control the degree of damping. The use of active or semi active systems may be useful to change the degree of damping, if there is an increased risk of an event.

In a highly preferred arrangement the at least one biased resilient member comprises a damper with an externally mounted spring.

In a preferred arrangement each at least one biased resilient member has a spring constant/mass which is greater than 100N/m/Kg, more preferably greater than 3000N/m/Kg, yet further preferably in the range of from 5000 to 10000N/m/Kg.

Preferably there are in the range of from 1 to 10 biased resilient members between the upper and lower hulls, more preferably in the range of from 4 to 6 biased resilient members. Preferably the total spring constant/mass for all biased resilient members is greater than 500N/m/Kg, preferably in the range of from 10,000N/m/Kg to 60,000N/m/Kg, more preferably in the range of 30,000 to 50,000, yet more preferably 40,000N/m/Kg.

By way of a comparison to currently available commercial cars and lorries, each of their suspension systems for each wheel set has suspension with a spring constant/mass value in the range of 15-50N/m/Kg, which provides sufficient stiffness to allow sufficient travel of the suspension with the attempted aim to avoid "bottoming out" when the suspension is fully compressed. Typically for currently available commercial cars this is achieved with a spring that has a spring constant of 400N/m, for a vehicle in the order of 1500Kg.

By way of an example for a 50kg remote controlled vehicle the least one biased resilient member may have a spring constant of at least 400N/m, thereby giving a standardised spring constant/mass of approximately 8000N/m/Kg. The stiffness/mass of such a high value is designed only to provide travel of the spring, when shock impulses of greater than 5g and providing mitigation in excess of 100 to 300g, shock impulse events. The external spring around the damper is preferably a die spring, to achieve such high spring constant k, values.

The vehicle may be an armoured personnel carrier, wherein the upper hull comprises at least one wall mounted seat system, preferably wherein the wall mounted seat system is a shock attenuating seat system.

The use of shape memory alloy drivetrain, and shape memory alloy suspension allows for a highly effective mine blast protected remote controlled vehicle. The combination of a V-shaped hull and more preferably a split hull, supported by flexible shape memory alloy suspension devices minimises the energy transfer to the hull. The vehicle is optimised to deflect as much as possible of the blast energy away from the key components in the hull.

An embodiment of the invention will now be described by way of example only and with reference to the accompanying drawings of which:-
Figure 1 shows a side view of a remote control blast protected vehicle
Figure 2 shows the wheel hub arrangement of a vehicle defined herein
Figure 3a, 3b shows a split hull arrangement at maximum and minimum displacements
Figure 4 shows a configuration of the spring and damper system for the split hull
Figure 5 shows a configuration of a split hull on an APC
Figure 6 shows a remote control split hull vehicle with roll cage
Figure 7 shows a cross section of Figure 6, along axis A-A'.

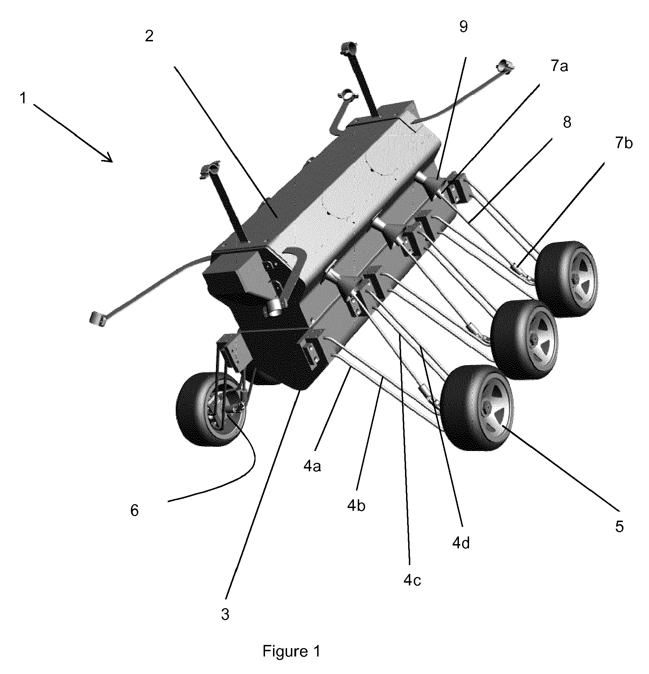

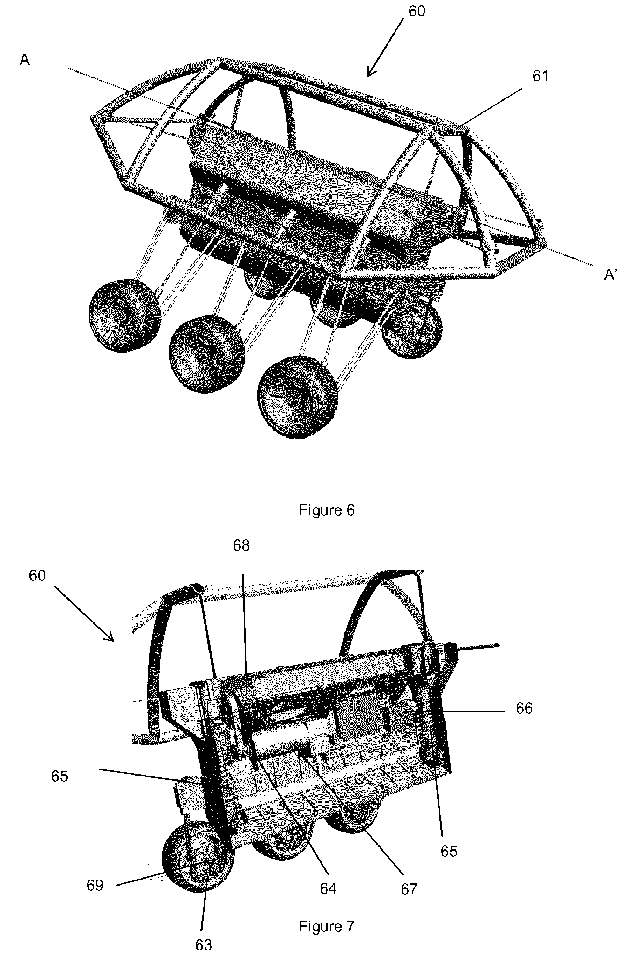

Turning to Figure 1, there is provided a man portable (50Kg) remote controlled blast protected vehicle 1. The RC vehicle comprising an upper hull 2 and lower V-sectioned hull 3. A plurality of shape memory alloy suspension elongate rods 4a,4b,4c and 4d, connect the V-hull 3, to the wheel sets 5, via the internal hub 6. Further there is provided a shape memory allow drive train 8, affixed by upper drive coupling 7a and lower drive coupling 7b, which may also be selected from shape memory alloy materials. A cowling 9, is located over the upper drive coupling 7a to mitigate against over deflection of the shape memory allow drive train 8. A plurality of arm supports, affix the external roll cage (shown in figure 6) to the upper hull 2.

In normal use the first pair of elongate suspension rods 4a, 4b and the second pair of elongate suspension rods 4c, 4d are spaced further apart than at the hub 6, such that in use, the wheel set 5 may not readily travel laterally along the major axis of the vehicle, such that travel of each wheel set is substantially limited to vertical displacement. The bending and flexing of the elongate rods allows for travel over rough terrain, and provides suspension without the need for traditional suspension and chassis systems.
The drivetrain could be replaced, such that the motor may located such that it forms part of the hub, (not shown).

During a shock event the force from an explosive event may in part be dissipated by the V shaped hull 3. Further the plurality of shape memory alloy suspension elongate rods 4a, 4b, 4c and 4d, as they are not encased, a large proportion of any blast will have a lower cross section across which to act, and any force that is exerted onto the rods, allow ready displacement and further attenuation of the blast. The SMA rods 4a, 4b, 4c and 4d, are able to undergo large deflections due to its super elastic properties.

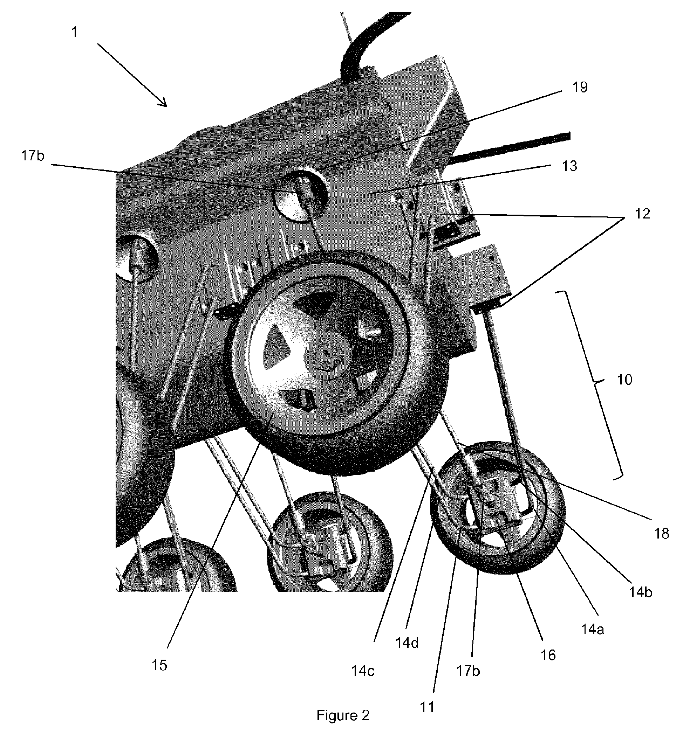

Turning to Figure 2, there is provided a RC vehicle 1, as shown in Figure 1, where the wheel set 15 has an integral hub 16. The hub 16 comprises a plurality of SMA rods 14a, 14b, 14c and 14d, which forms the suspension device 10, when connected to the hull 13 via connecting block 12. The connecting block 12, allows ready removal of a plurality of elongate rods 14a, and 14b, such that the wheel set 15 and hub 16 can be readily replaced as an entire unit. The SMA rods 14a-d, are preferably terminated with a bend radii 11, to provide further rigidity to hub 16.

The hub 16 is operably connected to the lower drive coupling 17b, which may also be selected from a shape memory alloy material. The lower drive coupling 17b, is operably connected to the shape memory alloy drivetrain 18, and, at the end distal to the hub 16, is operably connected via upper drive coupling 17b, which may also be selected from a shape memory alloy material, to a motor. The deflection of the drivetrain 18, may be mitigated by a cowling 19, to prevent excess movement, in the event of a blast hazard.

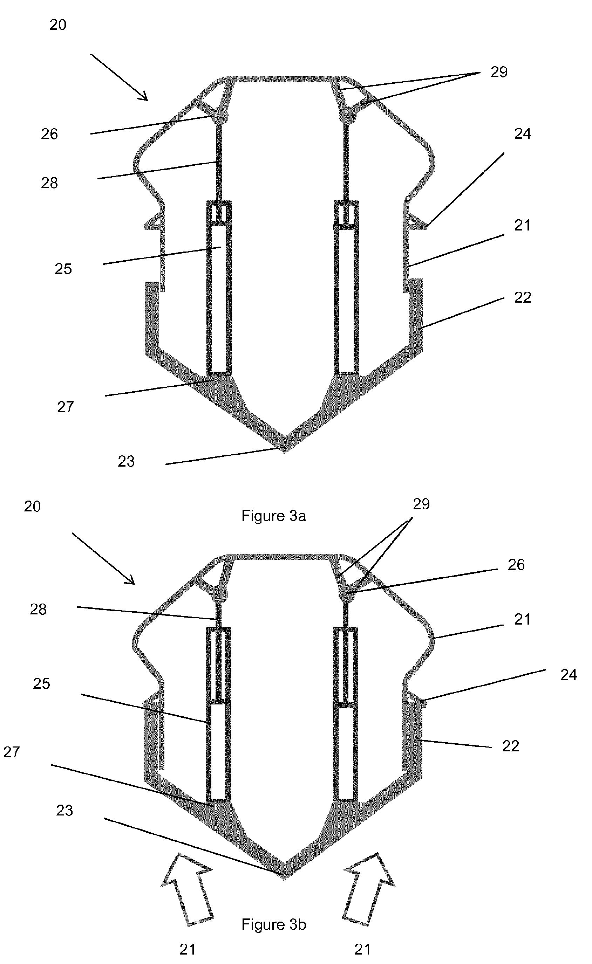

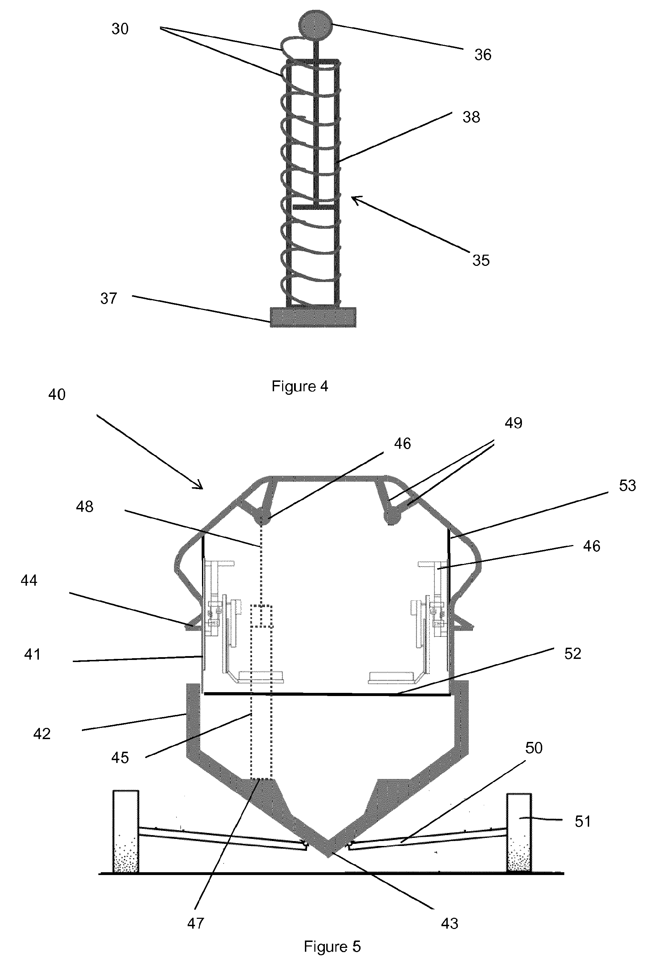

Turing to Figure 3a and 3b, there is provided a split hull 20, with an upper hull 21 and a lower hull 22. The upper and lower hulls are able slidably engaged such that the upper hull 21 is able to displace vertically within lower hull 22. The alternative arrangement where the upper hull 21 is able to displace vertically externally with respect to the lower hull 22 is readily achievable. The lower hull 22 comprises a V-shaped portion 23, which may provide enhanced blast deflection in the event of a shock impulse. A plurality of biased resilient member 25 are located between said upper hull 21 and lower hull 22, to reduce the travel between said upper and lower hulls in the event of a shock event The biased resilient member 25 may be a damper with an external spring and as shown in Figure 4. The biased resilient member 25 may be affixed via piston and spring portion 28, to the upper hull 21, via an upper connection support 26, which support may be distanced from the upper hull 21 by a plurality of struts 29. The struts 29 may dissipate the shock impulse over a wider area of the upper hull. The distal end of the biased resilient member 25 may be located on a lower connection support ledge 27.

The upper hull 21, may further comprise at least one stop 24, which may prevent over displacement of the upper and lower hull such that when the maximum travel of the lower hull is reached and the biased resilient member 25 has been fully compressed, that the lower hull 22 is prevented from further travel by the stop 24. The use of a plurality of individual stops or a projection which extends around the entire periphery of the upper hull, may prevent excess damage to the hull and spread the shock impulse force around a larger section of the upper and lower hulls. Further the stop 24 may be located on the lower hull 22, or a combination of both upper and lower stops.

In Figure 3b, biased resilient member 25 has been fully depressed and the maximum travel between the upper and lower has been reached such that the lower hull 22 has been prevented from further travel in a vertical position by the biased resilient member 25 and stops 24.

Figure 4 shows a side view of biased resilient member 35, which extends between and upper connection point 36 and lower connection point 37. The biased resilient member comprises an internal damper or shock absorber 38, with an externally located spring 30. The spring and damper will have different spring constants depending on the mass of the vehicle, however the spring constant per unit mass is selected to provide minimal travel some 50mm to dissipate the load from the impulse shock.

Figure 5 shows a section of an armoured personnel vehicle 40. The APV comprises a split hull with an upper hull 41 and a lower hull 42. The upper and lower hulls are able slidably engaged such that the upper hull 41 is able to displace vertically within lower hull 42. The alternative arrangement where the upper hull 41 is able to displace vertically externally with respect to the lower hull 42 is readily achievable. The lower hull 42 comprises a V-shaped portion 43, which may provide enhanced blast deflection in the event of a shock impulse. A plurality of biased resilient member (one shown as dotted line) 45 are located between said upper hull 41 and lower hull 42, to reduce the travel between said upper and lower hulls in the event of a shock event The biased resilient member 45 may be a damper with an external spring and as shown in Figure 4, with a significantly uprated spring constant. The biased resilient member 45 may be affixed via piston and spring portion 48, to the upper hull 41, via an upper connection support 46, which support may be distanced from the upper hull 41 by a plurality of struts 49. The struts 49 may dissipate the shock impulse over a wider area of the upper hull. The distal end of the biased resilient member 45 may be located on a lower connection support ledge 47.

The upper hull 41, may further comprise at least one stop 44, which may prevent over displacement of the upper and lower hull such that when the maximum travel of the lower hull is reached and the biased resilient member 45 has been fully compressed, that the lower hull 42 is prevented from further travel by the stop 44. The use of a plurality of individual stops or a projection which extends around the entire periphery of the upper hull, may prevent excess damage to the hull and spread the shock impulse force around a larger section of the upper and lower hulls. Further the stop 44 may be located on the lower hull 42, or a combination of both upper and lower hulls 41,42.

The upper hull 41 may comprise a floor panel 52, in the form of a spall liner, to provide further blast attenuation protection. The APC 40 may be fitted with blast attenuating seats 46 which are mounted to the walls 53 of the upper hull.

The lower hull may ride on a conventional chassis with axles 50, and wheels 51, with standard APC suspension systems and steering assemblies, (not shown).

Figure 6 shows a man portable (50Kg) remote controlled blast protected vehicle 60, with an external roll cage 61 fitted thereto. The roll cage 61 provides external protection to the upper hull, and a simple means of lifting the vehicle from a deployment platform. A section along line A-A' is shown in Figure 7

Figure 7 shows a section along A-A', of the RC vehicle 60. There are two biased resilient member 65, located either end of the vehicle 60. A battery power pack 66, is in electrical connection with a motor 67 which via a drive belt 64 provides drive via gearboxes (not shown) to each wheel set 63, via the shape memory alloy drivetrain 69. In the RC vehicle 60, the preferred arrangement is to have each side of the vehicle powered by a separate motor, such that skid steer may be used to control direction of travel, this removes the need for separate steering

In an alternative arrangement each drivetrain 69, may have an individual motor, wherein the motors are centrally operated such that skid steering may be effected. The use of a plurality of motors provides redundancy after a shock hazard event.

## Claims

1. A land vehicle comprising:-
an armoured v shaped hull;
at least one wheel set with a hub, and
at least one suspension device comprising a shape memory material operably connecting the hull to the wheel set.

2. A vehicle according to claim 1, wherein the at least one suspension device operably connects the hull to a hub located within the wheel set.

3. A vehicle according to claim 1 or claim 2 wherein the suspension device is in the form of a passive spring suspension.

4. A vehicle according to claim 3, wherein the passive spring suspension is a shape memory alloy in the form of at least one elongate rod, spring, leaf spring, plurality of thin elongate plates, torsion bars.

5. A vehicle according to claim any one of the preceding claims, wherein the suspension device is external to the vehicle.

6. A vehicle according to claim any one of the preceding claims, wherein the shape memory material is a shape memory alloy.

7. A vehicle according to claim 6, wherein the suspension device consists only of at least one shape memory alloy.

8. A vehicle according to claim 2 to 7, wherein a plurality of elongate rods of shape memory alloy operably extend and connect the hull to the hub of the wheel set.

9. A vehicle according to any one of the preceding claims, wherein the suspension device is in a wishbone configuration.

10. A vehicle according to any one of the preceding claims wherein there are a plurality of wheel sets.

11. A vehicle according to any one of the preceding claims wherein there is a power plant located within said vehicle,
at least one externally located drive shaft comprising a shape memory alloy, wherein said drive shaft is located between and operably connected via drive couplings to said power plant and the hub of the at least one wheel set, to provide drive to said at least one wheel set.

12. A vehicle according to selected from Cu-Al-Ni, NiTi, Fe-Mn-Si, Cu-Zn-Al, Cu-Al-Ni, and alloys of zinc, copper, gold and iron.

13. A vehicle according to any one of claims 4 to 12 wherein the plurality of elongate rods are arranged such that the spacing of the fixings to the hull are at a greater distance apart than the fixings on the hub.

14. A land vehicle comprising at least one suspension device, said at least one suspension device comprising a shape memory alloy.

15. A land vehicle according to claim 15 wherein the suspension device is at least one elongate rod, spring, leaf spring, plurality of thin elongate plates, or torsion bars.
